# EUROPEAN PATENT SPECIFICATION

(11) **EP 2 710 574 B1**
(45) Date of publication and mention of the grant of the patent: **28.02.2018**
(21) Application number: 11726961.3
(22) Date of filing: 29.04.2011
(51) Int. Cl.: G08G 5/04, G07C 5/08, G01S 5/00, G08G 5/00, G07C 5/00

(54) **AIRCRAFT NAVIGATION SYSTEM**
NAVIGATIONSSYSTEM FÜR EIN FLUGZEUG
SYSTÈME DE NAVIGATION D'AÉRONEFS

(43) Date of publication of application: 26.03.2014
(73) Proprietor: Flymaster Avionics, LDA., 3700-121 S. João da Madeira (PT)
(72) Inventor: DA FONSECA BASTOS GOMES, Nuno Filipe, P-3700-121 S. João da Madeira (PT); BARÃO PEREIRA, Cristiano Armando, P-3700-121 S. João da Madeira (PT); DOS SANTOS NUNES, Francisco Manuel, P-3700-121 S. João da Madeira (PT); SOARES TERRA DE OLIVEIRA FIGUEIREDO, Ricardo Nicolau, P-3700-121 S. João da Madeira (PT)
(74) Representative: Silvestre de Almeida Ferreira, Luís Humberto
(86) International application number: PCT/PT2011/000013
(87) International publication number: WO 2012/148296

(56) References cited:
- EP-A2- 2 063 550
- WO-A1-02/08057
- WO-A1-2011/002313
- WO-A2-2004/021141
- US-A1- 2010 160 013
- US-A1- 2010 292 871
- US-B1- 7 437 225

## Description

### Technical field

The present disclosure relates to devices that aid in aeronautical navigation, not only with processing and recording capability, but also with the capability of sending and receiving data via wireless network using secure protocol. The data exchanged may correspond not only to flight related information, but also to configuration commands, and security alarms.

### Background

The air navigation systems, specifically those used in low cost aircraft, such as paragliders, hand glider, hot air balloons and others have been experiencing a significant increase in the level of required functionalities. These features derive from the pilots needs in terms of control and optimization of the flight itself, in competition context, or not, but also from requirements imposed by the aeronautical authorities of each country, especially at safety level, and airspace control.
Considering the current, and expected short to medium term context, we recognize the following major features in the context of devising the present disclosure: Navigation in leisure and competition context; Flight performance optimization; availability flight log information and location data; availability to receive data on weather, safety, time windows in competition, airspace, presence of other aircraft, etc..; availability to send location data (voluntarily and non-voluntary), flight information, alarms, etc..; availability to operate and change operational parameters without or minimal user intervention.
Considering the state of the art in such type of devices one can conclude that there are no one capable of providing an integrated manner all the features described, and even when a significant number are provided they appear devoid of significant features. Moreover, the no less important fact, is that now, some of the features regarded as essential, such as those needed to control the airspace by the competent authorities, are only available on devices that by their intrinsic complexity, sheer size, weight, and / or energy requirements cannot be used on light aircraft such as paragliders and hang gliders.

An object of this disclosure is a device, and methods, for use in light aircraft capable of delivering in an integrated manner all the above mentioned features.
The Present disclosure has several differences to those on the document U.S. 5,798,733 and U.S. 2002/0003191. These documents do not present the disclosure two-way wireless communications, that allows establishing a secure communication channel with a remote server. These also do not disclose wireless interface to several external sensors, internal nonvolatile memory, mechanisms to detect device violation/tampering, nor do they provide information that includes, amongst other, horizontal and vertical velocity, position of the thermals, air glide ratio, ground glide ratio, required destination glide ratio, airspace, weather conditions, control of spatial and temporal windows in competition.
Beyond assisting the pilot to reach a specific landing zone, the available solutions are not able to assist the pilot in: maximizing performance in flight, whether in leisure or competition; increased level of safety in flight; record flight data and especially alarms and abnormal situations (black box), airspace control, operate without or minimal user intervention.

Document WO 02/08057 A1 discloses a system provides monitoring/feedback to a transportation vehicle regarding the state of that vehicle based on, at least, information provided by sensors located on or in the transportation vehicle. Document WO 02/08057 A1 also discloses monitoring the transportation vehicle provides information about the status of the transportation vehicle and equipment on or in the vehicle. Document WO 02/08057 A1 also discloses feedback information is provided to the transportation vehicle based on the information received during monitoring. Additionally, feedback information may be formulated based on additional criteria received from equipment other than the sensors located on or in the vehicle, for example, meteorological systems, geographic location systems, e.g., a radar system, a global positioning system, etc. Document WO 02/08057 A1 also discloses the information provided by the sensors and the formulated feedback information may be stored in memory on the transportation vehicle as well as at a stable location for archiving and subsequent analysis.

These facts are disclosed in order to illustrate the technical problem addressed by the present invention.

### Summary

The problem addressed by the present invention is to overcome the disadvantages of the prior art and to give a method and system for validating that an offender pilot does not intentionally hide time tracking point data for scoring a competition in real time by causing communication failure between an aircraft navigation system, used in an engine-less aircraft.

This is achieved by the features cited in appended claims 1, 11. The present invention relates to an engine-less aircraft navigation system (11) for communicating with a remote server as defined according to appended claim 11.

In a preferred embodiment, the system further comprises:
- wireless sensor communication module (5);
- user input module (6);
- internal sensor module (7);
- external sensor module (12);
- acoustic signalling module (9);
- power module (11).
In a preferred embodiment the processing unit (2, 100) comprises:
- flight data processor unit (101);
- flight data log unit (103);
- real-time tracking processor unit (104);
- navigation processor unit (106);
- remote server message processor unit (107).
In a preferred embodiment the processing unit (2, 100) further comprises:
- external sensors processor unit (102);
- aircraft location processor unit (105).
In a preferred embodiment the power module (11) is configured to provide remaining power verification and trigger actions accordingly.

The present invention also relates to a method of validating that an offender pilot does not intentionally hide tracking point data for scoring a competition in real-time as defined according to the appended claim 1. A preferred embodiment further comprises:
- receiving (5) external sensor data (12);
- inputting user interactions (6);
- receiving internal sensor data (7);
- acoustically signalling (9) alerts.
A preferred embodiment further comprises:
- processing data comprising one, or more of: pressure, temperature, location, ground velocity, airspeed, vertical velocity, altitude, wind speed and direction, dew point, terrain elevation, thermal location, flight weather conditions, landing window restrictions, airspace and collision-avoidance data;
- downloading data comprising one, or more of: wind speed and direction, temperature, dew point, terrain elevation, flight weather conditions, thermal location, landing window restrictions, airspace and collision-avoidance data, from the remote server;
- uploading data comprising one or more of: pressure, temperature, location, ground velocity, airspeed, vertical velocity, altitude and updated thermal location data, to the remote server.
A preferred embodiment further comprises:
- storing data comprising one or more of the following: location, altitude, ground velocity, vertical velocity, flight data, local and remote alarm logs, sensor, time and date data; and/or
- storing data comprising one or more of the following violation data: airspace, no-flight alarms, landing window restrictions; and/or
- storing data comprising one or more of the following: abnormal vertical velocity variations, abnormal wind conditions.
A preferred embodiment further comprises:
- storing data using secure data recording, referred as black box operation; and/or
- storing data using non-volatile memory.
A preferred embodiment further comprises processing wireless sensor packet data (500) which comprises:
- sensor id;
- sensor data type;
- sensor data length;
- sensor data value.
A preferred embodiment further comprises:
- detecting and recording tampering attempts, power off events;
- transmitting communication power off events, tampering attempts, respective date and time;
A preferred embodiment further comprises:
- securely associating system id with aircraft registration identification;
- securely associating system id with aircraft locator identification;
- triggering, when detected, a real-time accident alarm.
A preferred embodiment further comprises:
- reporting location and movement data of the aircraft;
- receiving location and movement data of other aircraft in the vicinity;
- alerting for potential aircraft collisions.
A preferred embodiment further comprises:
- receiving a navigation course comprising location points in sequence from the remote server;
- storing said navigation course;
- alerting for course location deviation and/or time and date deviations;
wherein the location of said points has a predefined tolerance and some of said points may have associated date and time objectives.

The present disclosure relates to a device to assist in aerial navigation, with a recording capacity, and transmission via wireless network to an external server of the different data types. Examples of data sent are: geographical location, thermal location, and alarms relating to abnormal situations. Data can be sent periodically, in response to an event, or in response to a request. The device also has the ability to receive and process, among other, data relating to flight information, configuration commands, routes, location of thermals, airspace, location of other aircraft, weather information and alarms related to abnormal situations. All messages are preferably sent in encrypted form, and using a protocol that verifies the delivery of information and is capable of recovery in case of failure. Using a visual and acoustic interface the device provides to the pilot of the aircraft all the preferably necessary information for flight optimization, both in the context of recreational, or competition flight.

Therefore, the present disclosure is useful for: Assisting the paraglider and hang glider pilot or another light aircraft pilot , particularly with no engine, maximizing flight performance both in competition or leisure context; Substantially increase the flight safety by providing information on the airspace, collision course alarms, changing of weather conditions, or others; Allow the airspace responsible authorities to control light aircrafts, like paragliders and hang gliders; Records Data flight and especially abnormal situations which means that the device can functioning like a black box; Enable automatic configuration trough a external server broadcast transmission of device parameters, or routes; Allow real-time monitoring of pilots, especially in competition context, thus greatly increasing safety and also media coverage of the event.

### Description of the figures

The following figures provide preferred embodiments for illustrating the description and should not be seen as limiting the scope.

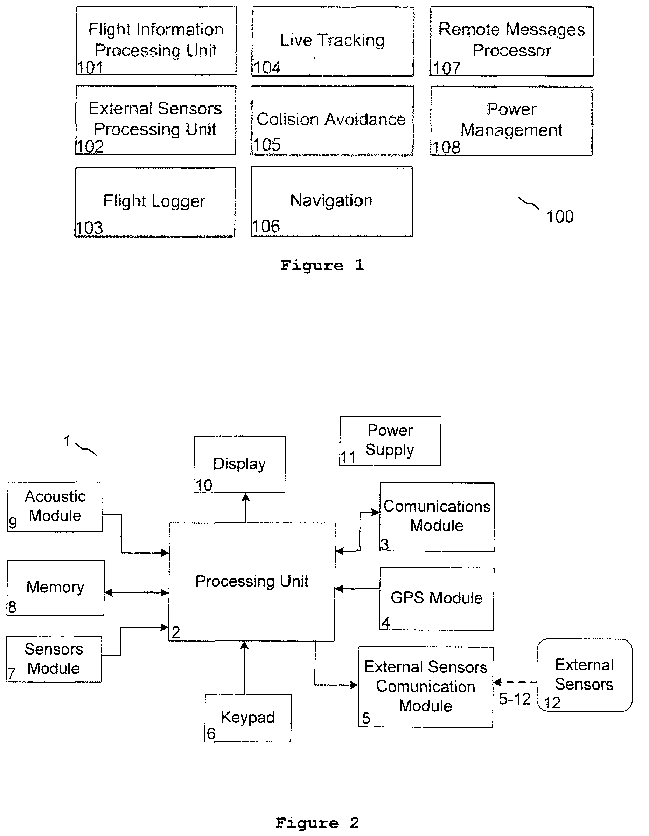

Figure 1 represents the main functional units of the disclosure. Each unit corresponds to a piece of code and is responsible for a certain number of tasks.
Figure 2 represents the main hardware modules of the invention. Each module has a specific function and is controlled associated with one, or more functional units of represented in Figure 1.

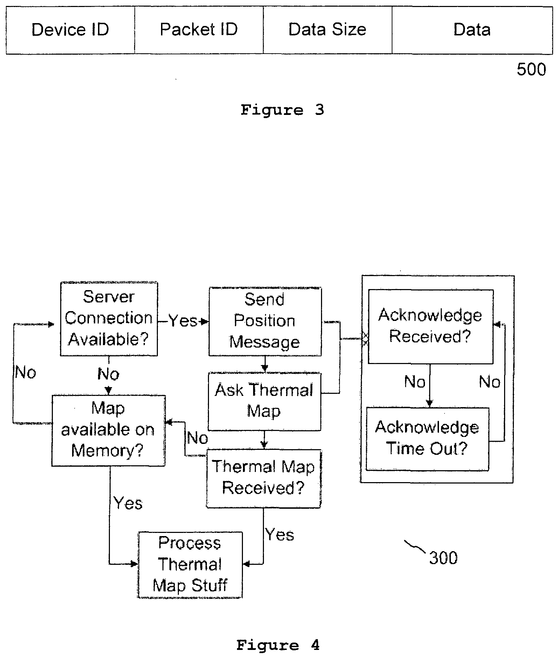

Figure 3 Illustrates the structure of the data package sent by the external sensors to the device. The data package is then processed by functional unit 102.
Figure 4 Corresponds to a general flowchart which illustrates the communication procedure between the device and the external server used to exchange thermal map related data.

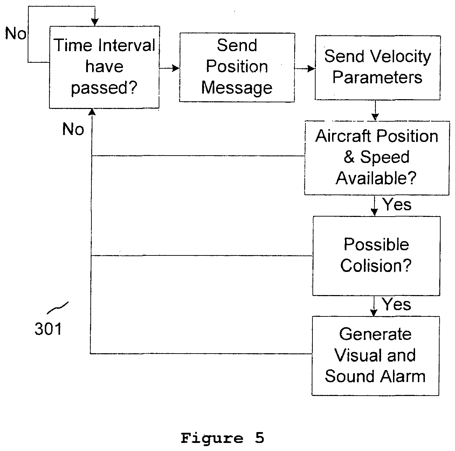

Figure 5 Corresponds to a general flowchart which illustrates the main process of functional unit 105. This unit is responsible for the collision avoidance.

### Detailed description

According to the disclosure the navigation system 1 is comprised by a processing unit 2 and its respective control software application, which is responsible for acquiring and processing data, communicating with the remote server, communication with external sensors and user interaction. The system also includes a set of modules that support the processing unit in performing its intended tasks.

Module 3 is responsible for the two-way wireless communication. Module 4 is a location one, preferably based on a GPS. Module 5 is a communications module with external sensors preferably wireless. Module 6 is preferably a keyboard that allows user interaction which is complemented by the module 10 which is preferably a display. Module 7 is comprised by a set of internal sensors. Module 8 is a memory module. Module 9 is the audio module capable of acoustic sound in the audible range.

Not limiting the disclosure, all modules are preferably included in a single package that should be light weight and have a small footprint. The device power is provided by module 11 which is a source powered preferably from batteries. The light weight, small footprint and low power consumption characteristic are very important to the success of the disclosure. One of the most important modules of this disclosure is the communications module 3,that assures communication with the remote server. This module should allow wireless communication with a remote server that provides services, ranging from weather information, through to safety, thermal map, collision avoidance, and airspace information. The services offered by the server are important to some of the features made available by the device. In general the communication channel must allow secure communications and ensure good coverage in the area of usage. For economic reasons, the preferred communication channel will be the mobile data network. However, other channels may be used, including satellite communication channels, which ensures greater coverage, especially in lightly populated areas. Considering the network coverage area importance, the communication module may provide several channel alternatives which the pilot, or the device, can choose according the situation.

A secure communication protocol will be implemented over the communication channel capable of exchanging data with the server. Data exchanging is assured even if failures occur in the channel. These requirements are essential for some of the differentiating features of this disclosure. While the transmission security is guaranteed by using a encryption algorithm, data delivery is guaranteed by implementing a handshaking protocol on the network services provided by the available infrastructure. Note that the communication module has the ability to guarantee delivery of data regardless of network type and available services, including SMS, UTMS, 3G, etc..

Based on data obtained from the modules, internal and external sensors, GPS module and the remote server, the device is capable of providing a broad range of information that includes flight information, guidance, safety airspace, etc.. The available information is processed in a processing unit, which runs a program whose functional units are shown in 100 and are described below.

The functional unit 101 is responsible for processing flight data. This unit uses data obtained from the sensors module 7, which includes a pressure and temperature sensor, external module 12, which may include temperature sensors, anemometers and others, and also data on terrain, weather conditions, and thermals obtained from remote server. Once data is processed, the device uses module 10 to display information to the pilot. In some cases, like the one of vertical velocity, or alarms, visual information can be complemented with audible information produced by the acoustic module 9.

Based on existing data the device offers all kinds of information available on the state of the art. Examples of such information are the vertical speed, altitude above sea level and altitude over a point, glide ratios air, ground, and for various purposes, speed and wind direction per layer, average vertical velocity, and maximum altitude gain, MacCready speed to fly, direction of maximum glide, speed for maximum glide, amongst many others.

In addition to information available in the state of the art, the possibility of secure communication with remote server enhances the availability of new and unique features of this disclosure. In terms of unit 101, one of these unique features is the thermal map. A thermal map corresponds to a representation, usually 2D or ideally 3D, of an ascending column of air that the pilot uses to climb. In general terms thermals are resident, which means that they originate from a specific fixed location. Even though the thermal origin point does not vary, its evolution in height depends on some parameters being the wind speed and direction the most important. Current thermal maps are based on historical data, ie through the analysis of various flight records is given an average location of each thermal that is then displayed to the pilot on a map, or other means. Since the location of thermals varies in height easily, especially with in the presence of wind, in practical terms a map based on historical data is of little use. A possible improvement to the thermal map is to update the position of thermals which have been used by the pilot. Naturally, in this case, the update will only be useful if the pilot comes back to the same place during the flight, and if there has been no conditions change such as wind speed and direction.

With the possibility of communicating with a remote server the thermal map functionality can be significantly improved, and thus become useful in all situations. In the absence of updated data the server uses historical data on the position of the thermals, stored in a database. This database can store the location of thermal , but due to the large storage capacity of the server, can also keep other parameters like the ones related with weather conditions in which thermals have occurred. Subsequently, based on a predetermined relational model it is possible to determine, with certain degree of confidence, the position of a thermal for a given set of parameters which define a certain weather condition. This weather condition can be easily obtained from forecasts, or meteorological observations. In a second stage, and as the flight is elapsing, the true position of the thermals will be verified and sent to the remote server. Based on this new information the server can make available to other pilots the exact location of the thermals which have been detected. Furthermore, the incoming information about thermals can be used to correct the forecast and to determine with greater accuracy the position of unexplored thermals. Last but not least, contrary to the state of the art, provided there is network coverage all information can be sent in real time in response to a request. Thus instead of the pilot needing to prepare his device well in advance, looking for the thermal map of the site and uploading it via a wired connection to a device that has limited memory capacity, as is currently the case, the pilot needs only power up the device and activate the feature, and everything is taken care of automatically. Not being part of this disclosure the processing of the thermal map by itself, on 300 is a flowchart of the process of interaction of the device with the remote server.

The functional unit 102 is responsible for processing data sent by external sensor, preferably linked by radio. The possibility of connecting to an external sensor module 12 wireless, while it may seem obvious to an expert from another area, is unique to the present disclosure. Being a wireless connection allows the locating of sensors in difficult to access locations, and at distances significantly greater than that which are possible using a physical connection. An example is the location of thermal sensors on wing tips do detect thermal cores. Examples like this, being exclusive of the disclosure, are extremely useful, especially for less experienced pilots whose sensitivity does not allow them to locate the core of the thermal, and hence the initial direction of rotation, amongst other things.

With the adequate protocol, the wireless link also enables expansion of the number and type of sensors, while not suffering from the limitations of a physical connection used in the state of the art. The wireless connection 5-12 can be made via radio using a modulation carrier and the free bands (315, 433, 868, and 915 MHz), according to the limits specified by the U.S. FCC and European ETSI, enabling a low cost, and low power consumption, implementation. Over the physical transmission channel it can be implemented a communication protocol that allows the simultaneous connection of multiple sensors. Not being a condition of the disclosure, an implementation possibility is the establishment of unidirectional radio link between the sensor and the device. Trough this link, the sensor periodically sends a data packet with the structure defined in 500. The package consists of a single value corresponding to the identifier of the sensor, a package identifier that determines the type of data, a value corresponding to the size of the data and finally the data. Unit 102 is responsible for receiving, validating and processing data that can later be used by other functional units such as Unit 101. The data packet may include other pieces of data such as a checksum, a hash, unique or random identifier, or even be encrypted.

Unit 103 is a flight data recorder. In general, the state of the art flight data recorder is comprised of a nonvolatile memory in which is recorded date and time, altitude and position coordinates. The recording process can start automatically, but preferably always under pilot's order. Also in a general way, the memory access is not protected, which means that it can be changed by the pilot. Furthermore, commonly flight logs can be erased trough an software option. Because there is no guarantee of inviolability of the data, and because saved data is insufficient, the recorder cannot be used as a black box. Unit 103 of the disclosure is based on a high capacity non volatile memory. This unit will store the same type of flight data used in the state of the art, but additionally, other relevant data will be stored, which latter will allow reconstruction of flight history. Some examples of such data are: Internally triggered alarms, or coming from the remote server, such as airspace violation, altitude limit violation, adverse weather conditions alarm, aircraft collision course alarm, airspace lockout, violation of landing deadline; From external sensors, such as, abnormal temperature variations, excessive wind speed. Besides the additional information recorded in the memory, the data is stored in encrypted form which makes it impossible for unauthorized direct access. Considering the information stored by the flight data recorder, and how this information is saved, the logger can function as a black box and help in the reconstruction of the flight history if necessary.

Unit 104 is responsible for tracking in real time. This is one of the main features of the disclosure, not only for its importance to the safety of pilots, but also the possibility to give the competent authorities means for controlling airspace. The main function of Real time tracking systems is to allow the monitoring of the device, usually through the periodic reading of the positioning coordinates of that device. Most tracking systems consist of a GPS module connected to a mobile communications unit. Once started, the system sends, at predetermined intervals, their coordinates to a given server. Since communication is uniderectional there is no guarantee of message delivery, nor the possibility of repeating the upload request. Moreover, state of the art live tracking systems are devoid of memory and/or data recovery mechanisms. Thus, if there is a miscommunication, or other problem, either accidental or intentional from the pilot, there is an actual loss of data resulting in an incomplete track. This characteristic prevents the use of the system to effectively control airspace, since an offender may intentionally hide their tracks, and the controller does not have means to prove a possible airspace violation. According to the present disclosure unit 104 provides means to guarantee delivery of tracking data, recovery track data in the event of communication process failure, and detection of attempted data violations. The guarantee of data delivery is ensured by the communication module 3. According to the protocol used, and presented above, delivery of a data package requires confirmation. Thus the non-delivery of a data packet is preferably always indicated and can be corrected. The responsibility of correcting the problems in communication on the transmission of tracking data is from unit 104. In order to guarantee the delivery of all data the communication process is preferably fully controlled by the device. Thus, if a communication failure occurs, accidentally or by intent of the pilot, a record of this event will be kept in the flight record. Later, once the communication is restored preferably all the missing points of the track will be sent, as well as information about the failure. Examples of failure messages are: "Signal failure"; "SIM card removed"(or equivalent element), "Battery failure". The device also has a sensor that detects a violation of the casing, so that opening the case will also create a record and subsequent transmission of this information. Considering the characteristics of the unit 104 is possible to distinguish the disclosure from the state of the art because: There is no loss of track data in the case of communication failure, or other; The data is stored and sent as soon as possible, and the correct delivery is checked. This feature is important when the device is used for scoring competitions in real time, since it makes possible to validate every point covered by the pilot. Contrary to what occurs currently, there is no need for the pilot to physically go to a specific location to have data read from his tracking device by physical connection; The transmission of track data is automatic, and any attempt to modify it is recorded and sent. Taking into account, the ability to automatically send encrypted track data, and that any attempt to modify data is also sent, the device can be used by authorities to control airspace. Specifically, through the association of aircraft registration is possible to track in real time, and identify the position of aircraft in violation of airspace. Another application of information provided by functional unit 104, is real-time tracking of all pilots competing in a competition. This tracking allows for media coverage of the competition task, since it can be followed world wide and in real time, online. More important than media coverage is safety, since in the case of an accident the device emits an alarm to the remote server which subsequently warns the organizers, allowing the immediate deployment of emergency services. Without this feature time spent looking for a pilot can prove fatal.

No less important than the unit 104 is the functional unit 105. This unit has the main purpose of reporting the position and movement of the device, and receive the position and movement of other aircraft sharing the same airspace. Based on information received the functional unit determines if there are aircraft on a collision course, and if they exist, generate a warning alarm to the pilot. This unit uses module 3 to send to the external server preferably all components of velocity, and position, obtained from unit 104. The external server has a processing unit that receives position, and speed information of several aircraft in flight, and then relays this information to all aircraft which share a given area. Based on information received from the remote server, unit 105 can easily determine if there are aircrafts on a collision course, and if available, to generate a visual and/or acoustic alarm to the pilot, using respectively module 10, and module 9. A flowchart of the functional unit 105 is specified on 301.

Unit 106 is responsible for navigation. According to the disclosure there are three possible modes of navigation, including "No defined route", "With defined route" and "Competition Route". Depending on the navigation mode the device provides a different set of information. On modes "With defined route", and "Competition Route", it is necessary to define a route. A route consists of a set of coordinates that must be achieved to a defined margin, and in a predetermined sequence. In the case of "Competition Route", different parameters such as time parameters, may be associated with each route point. In some cases, and depending on the configuration, visual and/or acoustics alarms can be generated using the module 9 and 10, or alarm messages can be sent to the remote server using module 3. Unit 104 operates independently to the unit 106. The selection of the navigation mode, as well as the definition, and configuration, of the routes, can be carried out by the pilot, or by the remote server. Remote configuration of the device is a very advantageous feature of this disclosure.

According to the disclosure, the functional unit 107 is responsible for processing messages sent by the remote server. Messages can be of different types, and can be used by most other functional units. Examples of messages used by other units are messages with meteorological information, orographic information, position and speed of other aircraft, etc.. When received messages are used by other functional units, unit 107 forwards them to the respective unit. However, there are special messages that require action by the unit 107. Examples are configuration, and alarm messages.

The most important configuration messages refer to the routes, and parameters of the routes. In these cases, after validating the information sent by the remote server, unit 107 performs automatic route settings without any intervention by the pilot. This capability provides an extremely useful feature, and very advantageous to the present disclosure, which can be used in various situations, but with additional advantages in the context of competition. Usually competition routes, also known as "tasks", are defined shortly before the start of that task. After the definition of a task, each pilot, already in a stressful situation, must configure the day's task on his device.

Sometimes, already with the task inserted, a last minute change occurs which needs to be communicated to all pilots so that they may reconfigure their devices. Frequently these changes are incorrectly configured giving rise to protests and outrage, and may even jeopardize the safety of pilots. With this feature the entity responsible for the event can use the remote server to send the route, and subsequent amendments thereto. The process is automatic and robust, minimizing the possibility for error.

More important than the configuration messages are the alarm messages. Alarm messages can be of various types, and sent by various entities. With regard to the processing unit 107, upon receipt and validation, should generate their visual and/or sound alarms, using the modules 10 and 9 respectively. Examples of types of messages are messages concerning airspace. In this case, the entity responsible for the airspace can, using the remote server, to detect aircraft approaching controlled airspace, or in violation of airspace. After this detection, the same entity can send an alarm message informing of the situation. The same type of alarm messages can be used in competition context. In this case, the organizer can send messages to pilots about opening, and closing time windows, or still more important, about changes in weather conditions which may require suspending, or cancelling the competition task. Currently this type of information is transmitted verbally via UHF/VHF radio which, very often due to lack of coverage, or other reason, the pilot does not receive, which potentially puts himself at risk. With the present disclosure this in prevented, since the system generates an alarm which preferably persists until pilot acknowledges the reception. The present invention is also particularly useful for unpowered aircraft that are typically flown directly and physically by the pilots themselves, and mostly solo. In these cases, especially so in gliders, and more especially so in paragliders or hang gliders, it is very useful that the pilot is able to receive and acknowledge alert messages, airspace or other navigation restrictions, or even full navigation courses, automatically and without needing to press keys or even key in lengthy information. The ability to keep both hands maneuvering the aircraft, while receiving and acknowledging this complex data, is valuable for performance and safety.

Module 11 is comprised by a power source, powered from batteries. This module, in addition to the normal management functions of battery charge and discharge, includes management system (Fuel Gauge) the accounts for the energy supplied to and removed from the battery. The system accurately determines, preferably continuously, the amount of available energy in the battery.

Based on the amount of energy available, functional unit 108 manages the resources of the device so that the most critical continue to operate for as long as possible. In general terms, when the energy level reaches certain level, some of the features are turned off. The order of shutdowns are preferably module 5 followed by 10, 9 and 7. At this level, the frequency of sending messages to the remote server is also reduced, and a low battery message may be sent. At the next level the sending of periodic messages is preferably halted. Finally, at the last level preferably all the modules are turned off, but a final set of messages containing last known location, and power-down event are sent. These messages are also preferably sent whenever the device is turned off.

The disclosure is of course not in any way restricted to the embodiments described and a person with ordinary skill in the art will foresee many possibilities to modifications thereof without departing from the scope of the invention as defined in the appended claims. The following claims set out particular embodiments of the invention.

## Claims

1. Method of validating that an offender pilot does not intentionally hide tracking point data for scoring a competition in real time by causing communication failure between an aircraft navigation system, used in an engine-less aircraft, and a remote server,
said navigation system comprising a processing unit (2), a memory (8), a location module (4), a sensor (7), and a communication module (3) configured to communicate with said server,
said method comprising the steps of:
a. securely communicating between said communication module (3) and said remote server;
b. periodically locating by said location module (4) and storing in said memory (8) as tracking point data the aircraft position;
c. receiving (3), storing (8) and processing (2) data from said remote server at said navigation system;
d. periodically sending said tracking point data by the communication module to said remote server;
e. receiving by the communication module (3) of secure acknowledge of reception of said data;
f. outputting alerts to the user (10) based on the position reported by the location module (4) and/or sensor (7, 12) data;
said method further comprising:
g. detecting by the processing unit (2) and recording in the memory (8) failure to communication and respective date and time;
h. transmitting, by the communication module to said remote server, communication failure type, respective date and time, and repeating communication of tracking point data once communication is re-established of the tracking point data for which delivery was not verified by the communication module;
i. generating, at the remote server, an alarm when a violation of airspace is detected from said received tracking point data.

2. Method of aircraft navigation for communication with a remote server according to the previous claim, further comprising:
a. securely associating system id with aircraft registration identification;
b. securely associating system id with aircraft locator identification;
c. triggering, when detected, a real-time accident alarm.

3. Method of aircraft navigation for communication with a remote server according to any of the previous claims, further comprising:
detecting by the processing unit (2) and recording in the memory (8) tampering attempts and power off events;
transmitting power off events, tampering attempts, respective date and time.

4. Method of aircraft navigation for communication with a remote server according to any of the previous claims further comprising:
a. receiving a navigation course comprising location points in sequence from the remote server;
b. storing said navigation course;
c. alerting for course location deviation and/or time and date deviations;
wherein the location of said points has a predefined tolerance and some of said points have associated date and time objectives.

5. Method of aircraft navigation for communication with a remote server according to any of the previous claims further comprising:
a. receiving (5) external sensor data (12);
b. inputting user interactions (6);
c. receiving internal sensor data (7);
d. acoustically signalling (9) alerts.

6. Method of aircraft navigation for communication with a remote server according to any of the previous claims further comprising:
a. processing data comprising one or more of: pressure, temperature, location, ground velocity, airspeed, vertical velocity, altitude, wind speed and direction, dew point, terrain elevation, thermal location, flight weather conditions, landing window restrictions, airspace and collision-avoidance data;
b. downloading data comprising one or more of: wind speed and direction, temperature, dew point, terrain elevation, flight weather conditions, thermal location, landing window restrictions, airspace and collision-avoidance data, from the remote server;
c. uploading data comprising one or more of: pressure, temperature, location, ground velocity, airspeed, vertical velocity, altitude and updated thermal location data, to the remote server.

7. Method of aircraft navigation for communication with a remote server according to any of the previous claims further comprising:
a. storing data comprising one or more of the following: location, altitude, ground velocity, vertical velocity, flight data, local and remote alarm logs, sensor, time and date data; and/or
b. storing data comprising one or more of the following violation data: airspace, no-flight alarms, landing window restrictions; and/or
c. storing data comprising one or more of the following: abnormal vertical velocity variations, abnormal wind conditions.

8. Method of aircraft navigation for communication with a remote server according to any of the previous claims further comprising:
a. storing data using secure data recording, referred as black box operation; and/or
b. storing data using non-volatile memory.

9. Method of aircraft navigation for communication with a remote server according to any of the previous claims further comprising processing wireless sensor packet data (500) which comprises:
a. sensor id;
b. sensor data type;
c. sensor data length;
d. sensor data value.

10. Method of aircraft navigation for communication with a remote server according to any claim 1 - 7 and for collision-avoidance, further comprising:
a. reporting location and movement data of the aircraft;
b. receiving location and movement data of other aircraft in the vicinity;
c. alerting for potential aircraft collisions.

11. Engine-less aircraft navigation system (1) for communicating with a remote server for validating that an offender pilot does not intentionally hide tracking point data for scoring a competition in real time by causing communication failure between the navigation system and the remote server, comprising:
a.communication module (3);
b. location module (4) ;
c.user output module (10);
d.memory module (8);
e. processing unit (2, 100), configured to receive, store and process data from said remote server through said communication (3) and memory (8) modules, securely acknowledge reception of said data through said communication (3) module, and output alerts to the system (1) user through the user output module (10), based on the position reported by the location module (4) and/or sensor (7, 12) data, further configured to carry out the method of any claim 1-10.

12. Aircraft navigation system (1) for communicating with a remote server according to claim 11 further comprising:
a. wireless sensor communication module (5);
b. user input module (6);
c. internal sensor module (7);
d. external sensor module (12);
e. acoustic signalling module (9);
f. power module (11).

13. Aircraft navigation system (1) for communicating with a remote server according to any claim 11-12 wherein the processing unit (2, 100) comprises:
a. flight data processor unit (101);
b. flight data log unit (103);
c. real-time tracking processor unit (104);
d. navigation processor unit (106);
e. remote server message processor unit (107).

14. Aircraft navigation system (1) for communicating with a remote server according to the previous claim wherein the processing unit (2, 100) further comprises:
a. external sensors processor unit (102);
b. aircraft location processor unit (105).

## Patentansprüche

1. Verfahren um sicherzustellen, dass ein regelwidrig handelnder Pilot nicht absichtlich Ortungsdaten unterdrückt, um bei einem laufenden Wettkampf Punkte zu erzielen, indem er die Kommunikation zwischen einem Flugzeugnavigationssystem, wie es bei motorlosen Flugzeugen verwendet wird, und einem Remoteserver stört,
wobei besagtes Navigationssystem aus einer Steuereinheit (2), einem Speicher (8), einem Ortungsmodul (4), einem Sensor (7) und einem Kommunikationsmodul (3) besteht, die für die Kommunikation mit besagtem Server konfiguriert sind,
wobei besagtes Verfahren folgende Schritte umfasst:
a. die sichere Kommunikation zwischen besagtem Kommunikationsmodul (3) und besagtem Remoteserver;
b. die regelmäßige Ortung durch besagtes Ortungsmodul (4) und Speicherung in besagtem Speicher (8) als Ortungsdaten der Flugzeugposition;
c. den Empfang (3), das Speichern (8) und das Verarbeiten (2) von Daten des besagten Remoteservers in besagtem Navigationssystem;
d. das regelmäßige Senden besagter Ortungsdaten durch das Kommunikationsmodul an den besagten Remoteserver;
e. den Empfang durch das Kommunikationsmodul (3) einer sicheren Empfangsbestätigung der besagten Daten;
f. Warnhinweisen an den Benutzer (10) aufgrund der vom Ortungsmodul (4) gemeldeten Position und/oder den vom Sensor (7, 12) gelieferten Daten;
wobei besagtes Verfahren außerdem umfasst:
g. das Erfassen von Kommunikationsstörungen durch den Prozessor (2) und deren Speichern im Speicher (8) mit entsprechendem Datum und Uhrzeit;
h. die Übermittlung durch das Kommunikationsmodul an besagten Remoteserver, mit Angabe der Art der Kommunikationsstörung und entsprechendem Datum und Uhrzeit sowie erneuter Übermittlung der Ortungsdaten, deren Empfang durch das Kommunikationsmodul nicht bestätigt wurde, sobald die Kommunikation wiederhergestellt ist;
i. das Auslösen eines Alarms auf dem Remoteserver, wenn aufgrund der besagten empfangenen Ortungsdaten eine Luftraumverletzung festgestellt wird.

2. Verfahren zur Flugzeugnavigation mit Kommunikation mit einem Remoteserver gemäß den vorherigen Ansprüchen weiter umfassend:
a. der sicheren Zuordnung der Systemkennung mit dem Luftfahrzeugkennzeichen;
b. der sicheren Zuordnung der Systemkennung mit der Kennung des Ortungsgeräts des Flugzeugs;
c. dem Auslösen eines Alarms in Echtzeit, sobald ein Unfall festgestellt wird.

3. Verfahren zur Flugzeugnavigation mit Kommunikation mit einem Remoteserver gemäß allen vorherigen Ansprüchen weiter umfassend:
das Erfassen von Manipulationsversuchen oder Unterbrechungen der Stromversorgung durch den Prozessor (2) und speichern im Speicher (8) mit entsprechendem Datum und Uhrzeit;
die Übermittlung von Unterbrechungen der Stromversorgung, Manipulationsversuchen mit entsprechendem Datum und entsprechender Zeit.

4. Verfahren zur Flugzeugnavigation mit Kommunikation mit einem Remoteserver gemäß allen vorherigen Ansprüchen weiter umfassend:
a. dem Empfang einer Flugstrecke mit aufeinanderfolgenden Ortungspunkte vom Remoteserver;
b. dem Speichern der besagten Flugstrecke;
c. der Ausgabe von Warnungen bei Abweichungen von der Flugstrecke und/oder der Uhrzeit und dem Datum;
wobei die Position der besagten Punkte eine vorgegebene Toleranz aufweist und einigen der besagten Punkten Datums- und Zeitvorgaben zugeordnet sind.

5. Verfahren zur Flugzeugnavigation mit Kommunikation mit einem Remoteserver gemäß allen vorherigen Ansprüchen weiter umfassend:
a. dem Empfang (5) externer Sensordaten (12);
b. der Eingabe von Interaktionen seitens des Benutzers (6);
a. dem Empfang interner Sensordaten (7);
d. der akustischen Ausgabe (9) von Warnmeldungen.

6. Verfahren zur Flugzeugnavigation mit Kommunikation mit einem Remoteserver gemäß allen vorherigen Ansprüchen weiter umfassend:
a. der Verarbeitung von Daten, die aus einem oder mehreren der folgenden Elemente bestehen: Druck, Temperatur, Standort, Geschwindigkeit über Grund, Fluggeschwindigkeit, Vertikalgeschwindigkeit, Höhe, Windgeschwindigkeit und Richtung, Taupunkt, Geländehöhe, thermische Lage, Flugwetterbedingungen, Einschränkungen beim Landefenster, Luftraum und Daten zur Kollisionsvermeidung;
b. dem Herunterladen von Daten, die aus einem oder mehreren der folgenden Elemente bestehen: Windgeschwindigkeit und Richtung, Temperatur, Taupunkt, Geländehöhe, Flugwetterbedingungen, thermische Lage, Einschränkungen beim Landefenster. Luftraum und Daten zur Kollisionsvermeidung vom Remoteserver;
c. dem Hochladen von Daten, die aus einem oder mehreren der folgenden Elemente bestehen: Druck, Temperatur, Standort, Geschwindigkeit über Grund, Fluggeschwindigkeit, Vertikalgeschwindigkeit, Höhe, und aktualisierte thermische Daten zum Standort auf den Remoteserver.

7. Verfahren zur Flugzeugnavigation mit Kommunikation mit einem Remoteserver gemäß allen vorherigen Ansprüchen weiter umfassend:
a. dem Speichern von Daten, die aus einem oder mehreren der folgenden Elemente bestehen: Standort, Höhe, Geschwindigkeit über Grund, Vertikalgeschwindigkeit, Flugdaten, Standort, Protokoll mit Fernwarnungen sowie Daten der Sensoren, der Uhrzeit und des Datums; und/oder
b. dem Speichern von Daten mit Informationen über einen oder mehrere der folgenden Verstöße: Luftraum, Warnmeldungen über Nichtflug, Einschränkungen beim Flugfenster; und/oder
c. dem Speichern von Daten, die aus einem oder mehreren der folgenden Elemente bestehen: anormale Veränderung bei der Vertikalgeschwindigkeit, anormale Windbedingungen.

8. Verfahren zur Flugzeugnavigation mit Kommunikation mit einem Remoteserver gemäß allen vorherigen Ansprüchen weiter umfassend:
a. dem Speichern von Daten unter Verwendung einer sicheren Datenaufzeichnung, auch Blackbox-Betrieb genannt; und/oder
b. dem Speichern von Daten unter Verwendung eines Festspeichers.

9. Verfahren zur Flugzeugnavigation mit Kommunikation mit einem Remoteserver gemäß allen vorherigen Ansprüchen weiter bestehend aus der Verarbeitung von gefunkten Datenpaketen eines Sensors (500) umfassend:
a. Sensorkennung;
b. Typ der Sensordaten;
c. Dauer der Sensordaten;
d. Wert der Sensordaten

10. Verfahren zur Flugzeugnavigation mit Kommunikation mit einem Remoteserver gemäß den Ansprüchen 1-7 sowie zur Kollisionsvermeidung umfassend:
a. der Übermittlung von Standort- und Bewegungsdaten des Flugzeugs;
b. dem Empfang von Standort- und Bewegungsdaten eines anderen in der Nähe befindlichen Flugzeugs;
c. der Warnung vor möglichen Flugzeugkollisionen.

11. Navigationssystem für motorlose Flugzeuge (1) mit Kommunikation mit einem Remoteserver, um sicherzustellen, dass ein regelwidrig handelnder Pilot nicht absichtlich Ortungsdaten unterdrückt, um bei einem laufenden Wettkampf Punkte zu erzielen, indem er die Kommunikation zwischen dem Navigationssystem des Flugzeugs und dem Remoteserver stört, umfassend:
a. Kommunikationsmodul (3);
b. Ortungsmodul (4);
c. Benutzerausgabemodul (10);
d. Speichermodul (8);
e. Prozessor (2, 100) für den Empfang, das Speichern und das Verarbeiten der von besagtem Remoteserver übermittelten Daten durch besagtes Kommunikationsmodule (3) und besagten Speicher (8), die sichere Empfangsbestätigung der übermittelten Daten durch besagtes Kommunikationsmodul (3) sowie der Ausgabe von auf den vom Ortungsmodul (4) übermittelten Position und/oder den Daten des Sensors (7, 12) basierenden Warnmeldungen an den Benutzer des Systems (1) über das Benutzerausgabemodul (10), der außerdem so konfiguriert ist, das er alle unter den Ansprüche 1-10 genannten Verfahren ausführen kann.

12. Flugnavigationssystem (1) für die Kommunikation mit einem Remoteserver gemäß Anspruch 11 umfassend:
a. Funksensorkommunikationsmodul (5);
b. Benutzereingabemodul (6);
c. internem Sensormodul (7);
d. externem Sensormodul (12);
e. Akustikmelder (9);
f. Strommodul (11).

13. Flugzeugnavigationssystem (1) für die Kommunikation mit einem Remoteserver gemäß Ansprüchen 11-12, bestehend aus einem Prozessor (2, 100) mit:
a. Prozessor zur Verarbeitung der Flugdaten (101);
b. Protokolleinheit für Flugdaten (103);
c. Prozessor zur Erzeiterfassung der Standortdaten (104);
d. Navigationsprozessor (106);
e. Prozessor (107) zur Verarbeitung von Meldungen des Remoteservers.

14. Flugzeugnavigationssystem (1) für die Kommunikation mit einem Remoteserver gemäß dem vorherigen Anspruch, bestehend aus einem Prozessor (2, 100) mit:
a. Prozessor für externe Sensoren (102);
a. Prozessor zur Standorterfassung des Flugzeugs (105).

## Revendications

1. Méthode pour vérifier qu'un pilote contrevenant ne dissimule pas volontairement les données de localisation afin de remporter une compétition en temps réel en causant une faille de communication entre un système de navigation aérienne, utilisé dans un avion sans moteur, et un serveur distant,
ledit système de navigation comprenant une unité de traitement (2), une mémoire (8), un module de localisation (4) un capteur (7), et un module de communication (3) configuré pour communiquer avec ledit serveur,
ladite méthode comprenant les étapes suivantes :
a. communication sécurisée entre ledit module de communication (3) et ledit serveur distant ;
b. localisation périodique effectuée par ledit module de localisation (4) et sauvegarde dans ladite mémoire (8) en tant que données de localisation de la position de l'avion ;
c. réception (3), sauvegarde (8) et traitement (2) des données dudit serveur distant sur ledit système de navigation ;
d. envoi périodique desdites données de localisation par le module de communication audit serveur distant;
e. réception par le module de communication (3) de la confirmation de réception sécurisée desdites données ;
f. envoi d'alertes à l'utilisateur (10) en fonction de la position reportée par les données du module de localisation (4) et/ou du capteur (7, 12) ;
ladite méthode comprenant également :
g. détection par l'unité de traitement (2) et enregistrement dans la mémoire (8) de l'échec de communication et de la date et heure respectives ;
h. transmission, par le module de communication audit serveur distant, du type d'échec de communication, la date et heure respectives, et répétition de la communication des données de localisation une fois que la communication des données de localisation dont la livraison n'a pas été vérifiée par le module de communication est réétablie ;
i. activation, sur le serveur distant, d'une alerte lorsque la violation de l'espace aérien est détectée à partir des données de localisation reçues.

2. Méthode de navigation aérienne pour communiquer avec un serveur distant selon la revendication précédente, comprenant également :
a. association sécurisée de l'identifiant du système avec l'identifiant d'enregistrement de l'avion ;
b. association sécurisée de l'identifiant du système avec l'identifiant de localisation de l'avion ;
c. déclenchement, lorsqu'il est détecté, d'une alerte d'accident en temps réel.

3. Méthode de navigation aérienne pour communiquer avec un serveur distant selon l'une quelconque des revendications antérieures, comprenant également :
détection par l'unité de traitement (2) et enregistrement dans la mémoire (8) des tentatives de sabotage et des événements hors tension ;
transmission des événements hors tension, tentatives de sabotage, et date et heure respectives.

4. Méthode de navigation aérienne pour la communication avec un serveur distant selon l'une quelconque des revendications antérieures comprenant également :
a. réception d'un itinéraire de navigation comprenant des points de localisation en séquence à partir du serveur distant ;
b. sauvegarde dudit itinéraire de navigation;
c. alerte de déviation de la localisation de l'itinéraire et/ou de déviations de la date et heure ;
dans laquelle l'emplacement desdits points a une tolérance prédéfinie et certains desdits points sont associés à des objectifs de date et heure.

5. Méthode de navigation aérienne pour communiquer avec un serveur distant selon l'une quelconque des revendications antérieures comprenant :
a. réception (5) des données du capteur externe (12);
b. introduction des intéractions des utilisateurs (6);
c. réception des données du capteur interne (7) ;
d. signalisation acoustique (9) des alertes.

6. Méthode de navigation aérienne pour communiquer avec un serveur distant selon l'une quelconque des revendications antérieures comprenant également :
a. traitement de données comprenant un ou plusieurs des éléments suivants : pression, température, localisation, vitesse au sol, vitesse aérodynamique, vitesse verticale, altitude, vitesse et direction du vent, point de rosée, élévation du terrain, localisation thermique, conditions météorologiques de vol, restrictions concernant les fenêtres lors de l'atterrissage, espace aérien et données anti-colision ;
b. téléchargement de données comprenant un ou plusieurs des éléments suivants : vitesse et direction du vent, température, point de rosée, élévation du terrain, conditions météorologiques de vol, localisation thermique, restrictions concernant les fenêtres lors de l'atterrissage, espace aérien, et données anti-colision, à partir du serveur distant ;
c. envoi de données comprenant un ou plusieurs des éléments suivants : pression, température, localisation, vitesse au sol, vitesse aérodynamique, vitesse verticale, altitude et données de localisation thermique actualisées, au serveur distant.

7. Méthode de navigation aérienne pour communiquer avec un serveur distant selon l'une quelconque des revendications antérieures comprenant également :
a. sauvegarde de données comprenant un ou plusieurs des éléments suivants : localisation, altitude, vitesse au sol, vitesse verticale, données de vol, enregistrements d'alertes locales et à distance, capteur, données de date et heure ; et/ou
b. sauvegarde de données comprenant une ou plusieurs des données de violation suivantes : espace aérien, alerte de vol interdit, restrictions concernant les fenêtres lors de l'atterrissage ; et/ou
c. sauvegarde de données comprenant un ou plusieurs des éléments suivants : variations de vitesse verticale anormales, conditions de vent anormales.

8. Méthode de navigation aérienne pour communiquer avec un serveur distant selon l'une quelconque des revendications antérieures comprenant également :
a. sauvegarde de données utilisant un enregistrement de données sécurisé, dénommé l'opération boîte noire ; et/ou
b. sauvegarde de données utilisant une mémoire non-volatile.

9. Méthode de navigation aérienne pour communiquer avec un serveur distant selon l'une quelconque des revendications antérieures, comprenant également le traitement de données en paquet du capteur sans fil (500) qui comprend :
a. identifiant du capteur;
b. type de données du capteur;
c. longueur de données du capteur ;
d. valeur des données du capteur.

10. Méthode de navigation aérienne pour communiquer avec un serveur distant selon l'une quelconque des revendications 1-7 et pour l'évitement des colisions, comprenant également :
a. rapport des données de localisation et de mouvement de l'avion ;
b. réception des données de localisation et de mouvement d'autres avions à proximité ;
c. alerte d'éventuelles collisions d'avions.

11. Système de navigation aérienne sans moteur (1) pour communiquer avec un serveur distant pour vérifier qu'un pilote contrevenant ne dissimule pas volontairement les données de localisation pour remporter une compétition en temps réel en causant une faille de communication entre le système de navigation et le serveur distant, comprenant :
a. module de communication (3);
b. module de localisation (4);
c. module de sortie de l'utilisateur (10);
d. module de mémoire (8);
e. unité de traitement (2, 100), configurée pour recevoir, sauvegarder et traiter des données dudit serveur distant à travers lesdits modules de communication (3) et de mémoire (8), accuser de façon sécurisée la réception desdites données à travers ledit module de communication (3), et émettre des alertes à l'utilisateur du système (1) à travers le module de sortie de l'utilisateur (10), en fonction de la position reportée par le module de localisation (4) et/ou les données du capteur (7, 12), également configuré pour mettre en oeuvre la méthode de l'une quelconque des revendications 1-10.

12. Système de navigation aérienne (1) pour communiquer avec un serveur distant selon la revendication 11, comprenant également :
a. module de communication capteur sans fil (5);
b. module d'entrée de l'utilisateur (6);
c. module capteur interne (7);
d. module capteur externe (12);
e. module de signalisation acoustique (9);
f. module de puissance (11).

13. Système de navigation aérienne (1) pour communiquer avec un serveur distant selon l'une quelconque des revendications 11-12 dans lequel l'unité de traitement (2, 100) comprend :
a. unité de traitement des données de vol (101) ;
b. unité d'enregistrement de données de vol (103) ;
c. unité de traitement de localisation en temps réel (104) ;
d. unité de traitement de navigation (106) ;
e. unité de traitement de messages du serveur distant (107).

14. Système de navigation aérienne (1) pour communiquer avec un serveur distant selon la revendication antérieure dans lequel l'unité de traitement (2, 100) comprend également :
a. unité de traitement des capteurs externes (102);
b. unité de traitement de localisation d'avion (105).
